# EUROPEAN PATENT APPLICATION

(11) **EP 4 792 960 A1**
(43) Date of publication of application: **19.08.2026**
(21) Application number: 26153133.9
(22) Date of filing: 21.01.2026
(51) Int. Cl.: B22F 12/00, B29C 64/255, B33Y 30/00, B33Y 40/00, F16J 1/00, F16J 9/06, F16J 15/3208, F16J 15/3212, F16J 15/56

(54) **SEAL ASSEMBLY FOR BUILD TANKS FOR ADDITIVE MANUFACTURING BY POWDER BED**

(30) Priority: 14.02.2025 US 202519053524
(71) Applicant: General Electric Company, Cincinnati, Ohio 45215 (US)
(72) Inventor: OLAUSSON, Stefan, 45215 Evendale, OH (US)
(74) Representative: Hafner & Kohl PartmbB

(57) **Abstract**

A build tank (100) includes a tank wall (102) including an inner surface (106) and an outer surface (108) opposite the inner surface (106), a movable table (104) including an outer edge (120), and a seal assembly (128) provided between the inner surface (106) of the tank wall (102) and the outer edge (120) of the movable table (104), the seal assembly (128) including a spring plate (158) including a plurality of springs (174) contacting the outer edge (120) of the movable table (104) and a rope seal (162) provided between the spring plate (158) and the inner surface (106) of the tank wall (102) and contacting the inner surface (106) of the tank wall (102).

## Description

### TECHNICAL FIELD

The present specification generally relates to build tanks for additive manufacturing and, more specifically, build tanks including seal assemblies that account for expansion.

### BACKGROUND

In additive manufacturing systems, particularly those utilizing powder-based techniques, a build tank often includes a movable table to adjust a height of a build platform during a layer-by-layer fabrication process. Seals are commonly employed between edges of the movable table and the walls of the build tank to prevent fine build powder from escaping into adjacent components or the underlying system. Traditional seal designs rely on tight tolerances and rigid materials to maintain a barrier, but these approaches are often insufficient for dynamic conditions encountered during operation. Misalignments, caused by the movable table not being perfectly centered within the build tank can create gaps or uneven compression of the seal, which compromises the ability to contain the powder effectively.

Furthermore, thermal fluctuations during the additive manufacturing process can lead to expansion and contraction of the build tank, the movable table, and adjacent sealing components. Many existing seal designs fail to account for these dimensional changes, thus leading to degraded sealing performance over time. Rigid seals may become overly compressed, resulting in increased friction and wear, while flexible seals may lose their shape or resilience, allowing powder leakage. These issues can lead to contamination of internal components of the system, increased maintenance requirements, and reduced overall system reliability, particularly in high-precision applications. Accordingly, a need exists for improved seal assemblies that account for the above failures of existing seals for build tanks.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts a perspective view of a build tank, according to one or more embodiments shown and described herein;
FIG. 2 schematically depicts a cross-sectional front view of the build tank, according to one or more embodiments shown and described herein;
FIG. 3 schematically depicts a partial cross-sectional perspective view of a seal assembly between a movable table and a tank wall of the build tank, according to one or more embodiments shown and described herein;
FIG. 4 schematically depicts a perspective view of a spring plate of the seal assembly, according to one or more embodiments shown and described herein;
FIG. 5 schematically depicts an enlarged partial perspective view of the spring plate, according to one or more embodiments shown and described herein;
FIG. 6 schematically depicts a perspective view of a contact ring of the seal assembly, according to one or more embodiments shown and described herein;
FIG. 7 schematically depicts a perspective view of a rope seal of the seal assembly, according to one or more embodiments shown and described herein;
FIG. 8 schematically depicts a partial cross-sectional front view of another embodiment of a seal assembly between a movable table and a tank wall of a build tank, according to one or more embodiments shown and described herein;
FIG. 9 schematically depicts a partial cross-sectional front view of another embodiment of a seal assembly between a movable table and a tank wall of a build tank, according to one or more embodiments shown and described herein; and
FIG. 10 schematically depicts a partial cross-sectional front view of another embodiment of a seal assembly between a movable table and a tank wall of a build tank, according to one or more embodiments shown and described herein.

### DETAILED DESCRIPTION

Embodiments described herein are directed to a build tank including a tank wall having an inner surface and an outer surface opposite the inner surface, a movable table including an outer edge, and a seal assembly provided between the inner surface of the tank wall and the outer edge of the movable table. The seal assembly includes a spring plate including a plurality of springs contacting the outer edge of the movable table and a rope seal provided between the spring plate and the inner surface of the tank wall and contacting the inner surface of the tank wall. The seal assembly accounts for expansion and contraction of various components of the build tank during operation. For example, during contraction of the movable table and/or expansion of the tank wall such that a gap defined between the movable table and the tank wall increases, the seal assembly expands to ensure that powder material does not fall between the gap and into adjacent components of the build tank. Various embodiments of the build tank and the operation of the seal assembly are described in more detail herein. Whenever possible, the same reference numerals will be used throughout the drawings to refer to the same or like parts.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

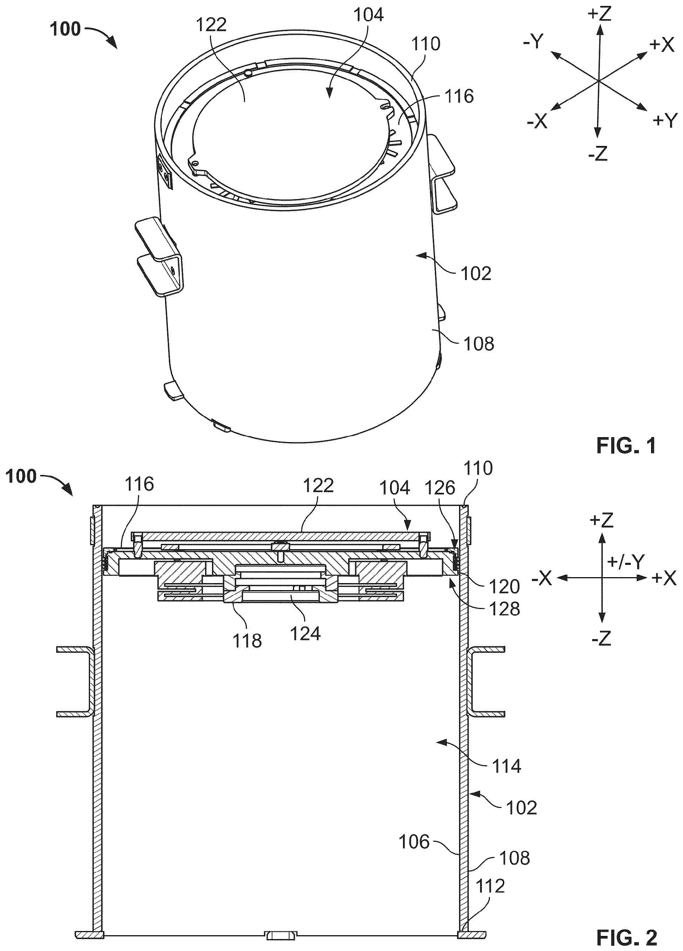

As used herein, the term "longitudinal direction" refers to the forward-rearward direction (e.g., in the +/- Y direction of the coordinate axes depicted in FIG. 1). The term "lateral direction" refers to the cross direction (e.g., in the +/- X direction of the coordinate axes depicted in FIG. 1) and is transverse to the longitudinal direction. The term "vertical direction" refers to the upward-downward direction (e.g., in the +/- Z direction of the coordinate axes depicted in FIG. 1). As used herein, "upper" and "above" are defined as the +Z direction of the coordinate axes shown in the drawings. "Lower" and "below" are defined as the -Z direction of the coordinate axes shown in the drawings.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

Referring now to FIGS. 1 and 2, a build tank 100 is illustrated according to one or more embodiments described herein. The build tank 100 generally includes a tank wall 102 and a movable table 104. The tank wall 102 includes an inner surface 106, an outer surface 108 opposite the inner surface 106, an upper end 110, and a lower end 112 opposite the upper end 110. The inner surface 106 of the tank wall 102 defines an open interior 114 in which the movable table 104 is positioned. As shown, the inner surface 106 of the tank wall 102 defines a circular cross-sectional shape. However, it should be appreciated that the inner surface 106 of the tank wall 102 may define any suitable shape such as, for example, elliptical, square, rectangular, or the like.

As described in more detail herein, the movable table 104 translates in a vertical direction (+/- Z direction) within the open interior 114 of the tank wall 102 between the upper end 110 and the lower end 112 of the tank wall 102. The movable table 104 includes an upper surface 116, a lower surface 118 opposite the upper surface 116, and an outer edge 120. In embodiments, a build platform 122 is mounted to the upper surface 116 of the movable table 104. Powder material is typically deposited onto the build platform 122 where a component or article is to be formed. However, in other embodiments, the upper surface 116 of the movable table 104 itself defines a build platform and the powder material is deposited directly onto the upper surface 116 of the movable table 104. As shown, the outer edge 120 of the movable table 104 has a circular shape corresponding to the shape of the inner surface 106 of the tank wall 102. However, it should be appreciated that the outer edge 120 of the movable table 104 may have any suitable shape such as, for example, elliptical, square, rectangular, or the like.

As shown in FIG. 2, the movable table 104 includes an actuator receiver 124 formed in a center of the lower surface 118 of the movable table 104. Although not shown, an upper end of an actuator is received within the actuator receiver 124 of the movable table 104 and is operated to move the movable table 104 in the vertical direction between the upper end 110 and the lower end 112 of the tank wall 102.

During operation of the build tank 100 to build a component, individual layers of powder material are deposited on the build platform 122 or the upper surface 116 of the movable table 104. With each new layer of powder material deposited onto the build platform 122 or the upper surface 116 of the movable table 104, the actuator is operated to move the movable table 104 downward in the -Z direction of the coordinate axis a distance equal to a height of the layer of newly deposited powder material. The process of depositing a new layer of powder material and operating the actuator to move the movable table 104 downward in the -Z direction repeats until the component is completely built.

As described herein, the powder material may be susceptible to falling below the movable table 104 by entering a gap 126 formed between the inner surface 106 of the tank wall 102 and the outer edge 120 of the movable table 104. Accordingly, the build tank 100 includes a seal assembly 128 to inhibit powder material from falling through the gap 126. As shown in FIG. 2, the seal assembly 128 extends along the outer edge 120 of the movable table 104 to encircle the movable table 104 and is provided between the gap 126 formed between the inner surface 106 of the tank wall 102 and the outer edge 120 of the movable table 104.

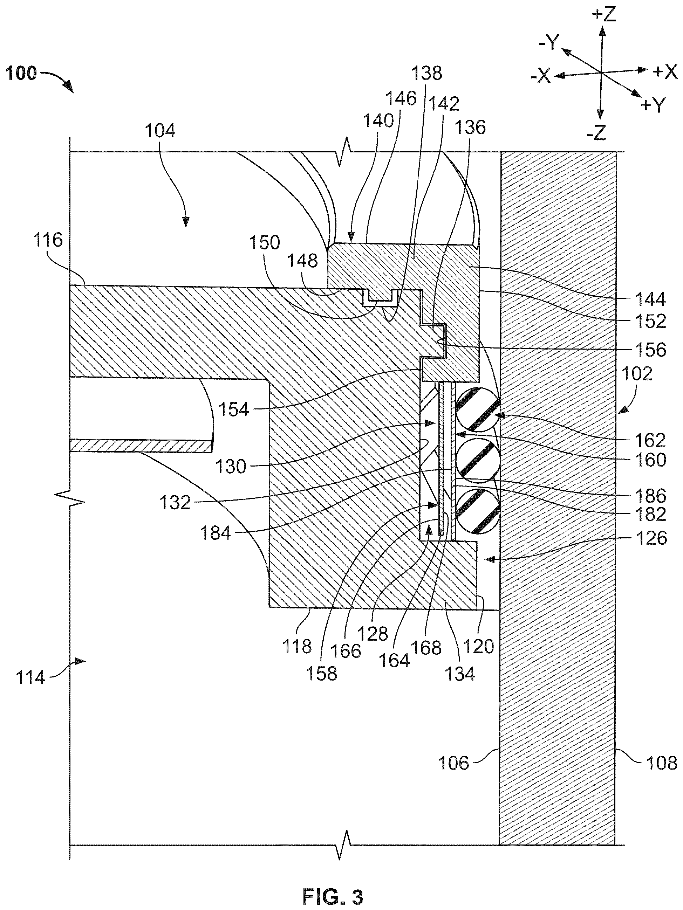

Referring now to FIG. 3, a partial perspective view of the build tank 100 is shown including the seal assembly 128 provided between the gap 126 formed between the inner surface 106 of the tank wall 102 and the outer edge 120 of the movable table 104. In embodiments, the movable table 104 includes a recess 130 formed in the outer edge 120 of the movable table 104. The recess 130 defines a recess wall 132 formed within the outer edge 120 of the movable table 104. In embodiments, the recess 130 extends along an entire perimeter of the outer edge 120 of the movable table 104.

In embodiments, the recess 130 defines a lower lip 134 at the lower surface 118 of the movable table 104. The lower lip 134 extends in an outward radial direction opposite a center of the movable table 104. In embodiments, an upper lip 136 is formed proximate the upper surface 116 of the movable table 104 such that the recess 130 is formed between the lower lip 134 and the upper lip 136. The upper lip 136 extends in an outward radial direction opposite the center of the movable table 104. Accordingly, the lower lip 134 and the upper lip 136 are spaced apart from one another and extend parallel to one another. In embodiments, a length of the lower lip 134 is greater than a length of the upper lip 136. In embodiments, the length of the lower lip 134 is equal to the length of the upper lip 136. In embodiments, the length of the lower lip 134 is less than the length of the upper lip 136. In embodiments, a channel 138 is formed in the upper surface 116 of the movable table 104 proximate, but spaced apart from, the outer edge 120 of the movable table 104. In embodiments, the channel 138 extends along an entire perimeter of the upper surface 116 of the movable table 104.

Referring still to FIG. 3, in embodiments, the build tank 100 includes a seal retaining member 140 mounted at the upper surface 116 and the outer edge 120 of the movable table 104. As shown, the seal retaining member 140 includes an upper wall 142 and a side wall 144 extending from an end of the upper wall 142. The upper wall 142 includes an upper surface 146 and a lower surface 148 opposite the upper surface 146. A tooth 150 extends from the lower surface 148 in a direction opposite the upper surface 146. In embodiments, the tooth 150 extends concentrically along the lower surface 148 of the upper wall 142.

In embodiments, the side wall 144 extends perpendicular to the upper wall 142. The side wall 144 includes an outer surface 152 and an inner surface 154 opposite the outer surface 152. A slot 156 is formed in the inner surface 154 of the side wall 144 and extends in a direction toward the outer surface 152 of the side wall 144. In embodiments, the slot 156 extends concentrically along the inner surface 154 of the side wall 144.

As shown in FIG. 3, the seal retaining member 140 is mounted at the upper surface 116 and the outer edge 120 of the movable table 104. Specifically, the seal retaining member 140 is positioned on the movable table 104 with the tooth 150 extending from the upper surface 146 of the upper wall 142 of the seal retaining member 140 received within the channel 138 formed in the upper surface 116 of the movable table 104. Additionally, the upper lip 136 extending from the outer edge 120 of the movable table 104 is received within the slot 156 formed in the inner surface 154 of the side wall 144 of the seal retaining member 140. In embodiments, the seal retaining member 140 may be a one piece, monolithic structure. In other embodiments, the seal retaining member 140 may be formed from a plurality of individual seal retaining member segments that are assembled to engage the movable table 104 and form a singular component. With the seal retaining member 140 positioned on the movable table 104, the seal retaining member 140 secures the seal assembly 128 between the side wall 144 of the seal retaining member 140 and the lower lip 134 of the movable table 104.

As shown in FIG. 3, in embodiments, the seal assembly 128 includes a spring plate 158, a pressure plate 160, and a rope seal 162. The spring plate 158 is positioned against the recess wall 132 of the movable table 104, the rope seal 162 is positioned against the inner surface 106 of the tank wall 102, and the pressure plate 160 is provided between the spring plate 158 and the rope seal 162.

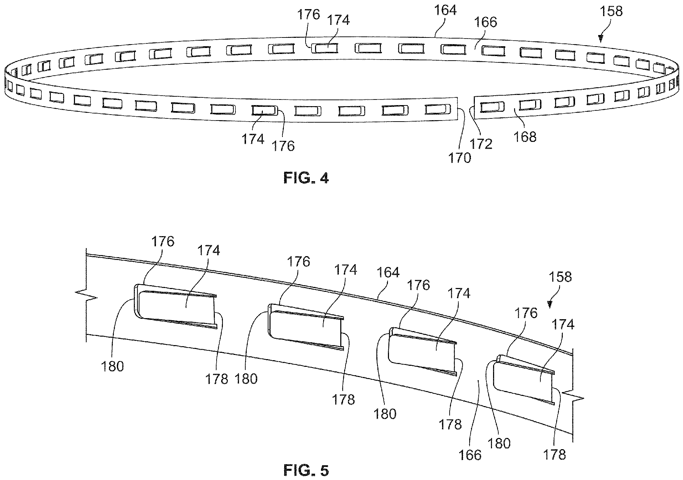

Referring now to FIG. 4, the spring plate 158 of the seal assembly 128 is shown. The spring plate 158 includes a body 164 having an inner surface 166, an outer surface 168 opposite the inner surface 166, a first end 170, and a second end 172 opposite the first end 170. As shown, the spring plate 158 is formed to have a circular geometry and is discontinuous at the first end 170 and the second end 172. The discontinuity between the first end 170 and the second end 172 allow for the spring plate 158 to adjust for possible expansion or contraction of the tank wall 102 and/or the movable table 104 during operation. The spring plate 158 includes a plurality of springs 174 positioned along the body 164 between the first end 170 and the second end 172.

Referring now to FIG. 5, a partial perspective view of the spring plate 158 is shown to better illustrate a subset of the springs 174. The spring plate 158 includes a plurality of spring openings 176 formed in the body 164 of the spring plate 158. The spring openings 176 extend through the inner surface 166 and the outer surface 168 and define a proximal edge 178 and a distal edge 180 opposite the proximal edge 178. Each spring 174 extends from the proximal edge 178 of a respective one of the spring openings 176 toward the distal edge 180 of the respective spring opening 176. Additionally, the spring 174 extends from the proximal edge 178 inwardly away from the body 164.

In embodiments, the springs 174 may be formed from the same material that forms the body 164. Particularly, in embodiments, the springs 174 may be formed by cutting, for example, laser cutting, a portion of the body 164 and bending the cut portion in a direction away from the outer surface 168 of the body 164. The spring plate 158 may be formed from any suitable non-magnetic material such as, for example, titanium, aluminum, copper, and the like. As described in more detail herein, the springs 174 are resilient such that pressure applied against the springs 174 to push the springs 174 within a respective spring opening 176 increases tension on the springs 174. Once the pressure applied against the springs 174 is alleviated, the springs 174 return to their original biased position.

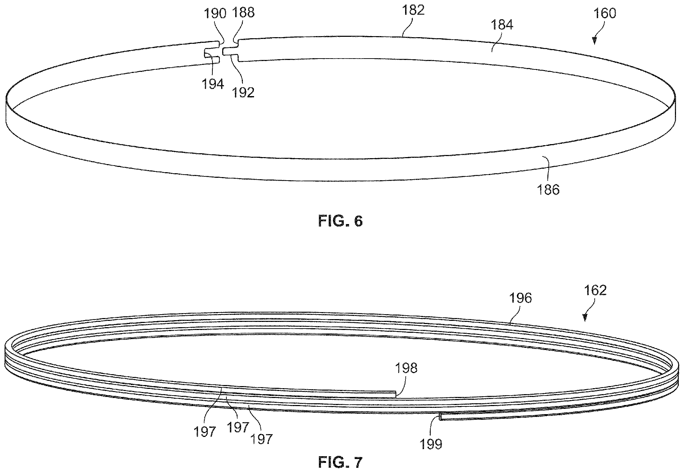

Referring now to FIG. 6, the pressure plate of the seal assembly 128 is shown. The pressure plate 160 includes a body 182 having an inner surface 184, an outer surface 186 opposite the inner surface 184, a first end 188, and a second end 190 opposite the first end 188. In embodiments, the inner surface 184 and the outer surface 186 of the pressure plate 160 are planar to provide a flush contact with the outer surface 168 of the spring plate 158 and the rope seal 162, as shown in FIG. 3, as discussed in more detail herein. As shown, the pressure plate 160 is formed to have a circular geometry and is discontinuous at the first end 188 and the second end 190. The discontinuity between the first end 188 and the second end 190 allow for the pressure plate 160 to adjust for possible expansion and contraction of the tank wall 102 and/or the movable table 104 during operation.

In embodiments, the first end 188 of the body 182 of the pressure plate 160 includes a finger 192, and the second end 190 of the body 182 defines a notch 194. The finger 192 may be received within the notch 194 to ensure alignment of the first end 188 with the second end 190 during expansion of the pressure plate 160. However, it should be appreciated that other manners for engaging and ensuring alignment of the first end 188 and the second end 190 of the body 182 of the pressure plate 160 are contemplated as being within the scope of the present disclosure. In other embodiments, the first end 188 and the second end 190 of the body 182 of the pressure plate 160 may not include any structure that encourages engagement and/or alignment between the first end 188 and the second end 190. The pressure plate 160 may be formed from any suitable non-magnetic material such as, for example, titanium, aluminum, copper, and the like. In embodiments, the pressure plate 160 is formed from the same material as the spring plate 158. In other embodiments, the pressure plate 160 is formed from a different material than the spring plate 158.

Referring now to FIG. 7, the rope seal 162 of the seal assembly 128 is shown. The rope seal 162 includes a body 196 having a first end 198 and a second end 199 opposite the first end 198. The body 196 of the rope seal 162 is wound to define a plurality of windings 197 encircling the spring plate 158 (FIG. 3). As shown, the rope seal 162 has three windings 197. However, it should be appreciated that the body 196 of the rope seal 162 may include any number of windings 197 depending on a diameter of the seal assembly 128 and a length of the rope seal 162 such as, for example, one, two, or more than three windings 197. The rope seal 162 may be formed from any suitable material such as, for example, stainless steel or the like. In embodiments, the rope seal 162 is formed from a fiber having a diameter equal to or greater than 5 micrometers (microns) and less than or equal to 50 microns. In embodiments, the rope seal 162 is formed from a fiber having a diameter equal to or greater than 10 microns and less than or equal to 20 microns.

Referring again to FIG. 3, the seal assembly 128 is now described with respect to expansion and contraction of the movable table 104 and/or the tank wall 102 exhibited during operation. For example, the springs 174 of the spring plate 158 initially contact the recess wall 132 of the movable table 104 and the outer surface 168 of the body 164 of the spring plate 158 contacts the inner surface 184 of the body 182 of the pressure plate 160. The pressure plate 160 functions to evenly distribute pressure exhibited by the spring plate 158 and apply the pressure against the rope seal 162, which contacts the inner surface 106 of the tank wall 102.

In situations in which a diameter of the movable table 104 expands or a center of the movable table 104 shifts in a particular radial direction against the springs 174 of the spring plate 158 to reduce a size of the gap 126, the springs 174 are compressed toward the inner surface 166 of the body 164 of the spring plate 158. This maintains the compression of the rope seal 162 against the inner surface 106 of the tank wall 102.

Similarly, as the diameter of the build tank 100 contracts such that the tank wall 102 moves closer to the outer edge 120 of the movable table 104 to reduce a size of the gap 126, pressure applied by the rope seal 162 against the pressure plate 160, and thus against the body 164 of the spring plate 158, increases. This causes the springs 174 to compress toward the inner surface 166 of the body 164 of the spring plate 158 and maintain the compression of the springs 174 against the recess wall 132 of the movable table 104.

Alternatively, as the movable table 104 contracts or a center of the movable table 104 shifts in a particular radial direction away from the springs 174 of the spring plate 158 to increase a size of the gap 126, the springs 174 are biased away from the inner surface 166 of the body 164 of the spring plate 158. This maintains contact between the springs 174 and the recess wall 132 of the movable table 104 and additionally maintains contact of the rope seal 162 against the inner surface 106 of the tank wall 102.

Similarly, as the diameter of the tank wall 102 expands such that the tank wall 102 moves away from the outer edge 120 of the movable table 104 to increase a size of the gap 126, pressure applied by the rope seal 162 against the pressure plate 160, and thus against the body 164 of the spring plate 158, decreases. This causes the springs 174 to bias away from the inner surface 166 of the body 164 of the spring plate 158. This maintains contact between the springs 174 and the recess wall 132 of the movable table 104 and additionally maintains contact of the rope seal 162 against the inner surface 106 of the tank wall 102.

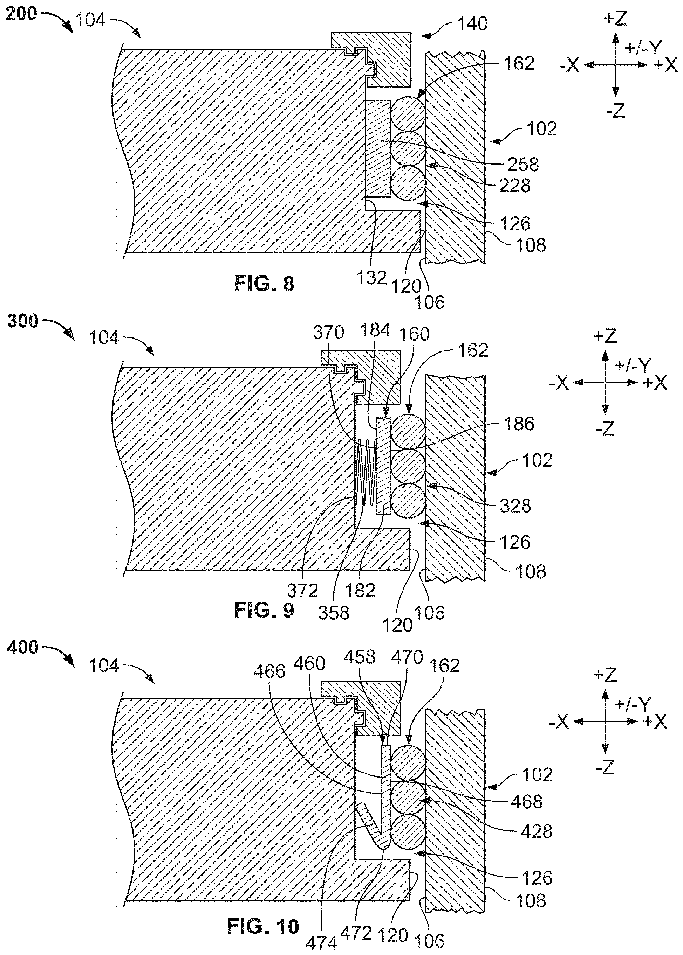

Referring now to FIG. 8, a partial cross-sectional view of another embodiment of a build tank 200 is shown. The build tank 200 includes similar structure to the build tank 100 illustrated in FIG. 3. As such, like reference numbers will be used to refer to like parts. Specifically, the build tank 200 includes the tank wall 102, the movable table 104 spaced apart from the tank wall 102 to define the gap 126, and the seal retaining member 140. Additionally, the build tank 200 includes a seal assembly 228 provided within the gap 126 formed between the tank wall 102 and the movable table 104.

The seal assembly 228 includes a piston ring 258 and the rope seal 162. The piston ring 258 may be formed from any compressible material such as, for example, polyurethane foam, silicone rubber, neoprene, thermoplastic elastomer, or the like. The piston ring 258 may have any suitable cross-sectional shape such as, for example, circular, elliptical, rectangular, square, or the like. The piston ring 258 is positioned against the recess wall 132 of the movable table 104 and the rope seal 162 is positioned between the piston ring 258 and the inner surface 106 of the tank wall 102.

Accordingly, during operation as the movable table 104 and/or the tank wall 102 experiences expansion or compression, the seal assembly 228 continues to extend across the gap 126 between the movable table 104 and the tank wall 102 to prevent powder material from falling through the gap 126. Specifically, the piston ring 258 expands or contracts with the movable table 104 and/or the tank wall 102 to maintain contact with the rope seal 162 against the inner surface 106 of the tank wall 102.

Referring now to FIG. 9, a partial cross-sectional view of another embodiment of a build tank 300 is shown. The build tank 300 includes similar structure to the build tank 100 illustrated in FIG. 3. As such, like reference numbers will be used to refer to like parts. Specifically, the build tank 300 includes the tank wall 102, the movable table 104 spaced apart from the tank wall 102 to define the gap 126, and the seal retaining member 140. Additionally, the build tank 300 includes a seal assembly 328 provided within the gap 126 formed between the tank wall 102 and the movable table 104.

The seal assembly 328 includes a plurality of biasing members 358, the pressure plate 160, and the rope seal 162. Although only a single biasing member 358 is illustrated, it should be appreciated that a plurality of biasing members 358 are spaced apart from one another around the outer edge 120 of the movable table 104. The biasing members 358 may be any suitable structure such as, for example, a spring, polyurethane foam, silicone rubber, neoprene, thermoplastic elastomer, or the like. As shown, the biasing member 358 is depicted as a spring including a first end 370 and a second end 372 opposite the first end 370. The first end 370 is provided at the inner surface 184 of the pressure plate 160. In embodiments, the first end 370 is fixed to the inner surface 184 of the body 182 of the pressure plate 160 in any suitable manner such as, for example, welding or the like. In other embodiments, the first end 370 merely abuts against the inner surface 184 of the body 182 of the pressure plate 160. In other embodiments, the first end 370 is received within a pocket or otherwise retained within the body 182 of the pressure plate 160 to maintain the position of the biasing members 358. Additionally, in embodiments, the second end 372 is fixed to the recess wall 132 of the movable table 104 in any suitable manner such as, for example, welding or the like. In other embodiments, the second end 372 merely abuts against the recess wall 132 of the movable table 104. In other embodiments, the second end 372 is received within a pocket or otherwise retained within the recess wall 132 of the movable table 104 to maintain the position of the biasing members 358.

Accordingly, during operation as the movable table 104 and/or the tank wall 102 experiences expansion or compression, the seal assembly 328 continues to extend across the gap 126 between the movable table 104 and the tank wall 102 to prevent powder material from falling through the gap 126. Specifically, the biasing members 358 expand or contract with the movable table 104 and/or the tank wall 102 to maintain contact with the rope seal 162 against the inner surface 106 of the tank wall 102 via the pressure plate 160.

Referring now to FIG. 10, a partial cross-sectional view of another embodiment of a build tank 400 is shown. The build tank 400 includes similar structure to the build tank 100 illustrated in FIG. 3. As such, like reference numbers will be used to refer to like parts. Specifically, the build tank 400 includes the tank wall 102, the movable table 104 spaced apart from the tank wall 102 to define the gap 126, and the seal retaining member 140. Additionally, the build tank 400 includes a seal assembly 428 provided within the gap 126 formed between the tank wall 102 and the movable table 104.

The seal assembly 428 includes a spring plate 458 and the rope seal 162. The spring plate 458 includes a body 460 having an inner surface 466, an outer surface 468 opposite the inner surface 466, an upper edge 470 and a lower edge 472 opposite the upper edge 470. Additionally, the spring plate 458 includes a plurality of springs 474 extending from the lower edge 472 of the body 460 of spring plate 458 in a direction opposite the outer surface 468 of the body 460. Although only a single spring 474 is illustrated in FIG. 10, it should be appreciated that a plurality of springs 474 are provided along the lower edge 472 of the body 460 of the spring plate 458. As with the spring plate 158 described herein and illustrated in FIG. 5, the springs 474 are spaced apart from one another.

The springs 474 may be formed as a one-piece, monolithic structure with the body 460 of the spring plate 458 by cutting a portion of the body 460 of the spring plate 458 and bending the cut portion away from the outer surface 468 of the body 460. In other embodiments, the springs 474 may be formed separately from the body 460 of the spring plate 458 and subsequently attached to the lower edge 472 of the body 460. In either instance, the body 460 of the spring plate 458, as well as the springs 474 themselves, may be formed from any suitable non-magnetic material such as, for example, titanium, aluminum, copper, and the like. The springs 474 are resilient such that pressure applied against springs 474 increases tension on the springs 474. Once the pressure applied against the springs 474 is alleviated, the springs 474 return to their original biased position, as shown in FIG. 10 with an end of the spring opposite the lower edge of the body 460 of the spring plate 458 contacting the recess wall 132 of the movable table 104.

Accordingly, during operation as the movable table 104 and/or the tank wall 102 experiences expansion or compression, the seal assembly 428 continues to extend across the gap 126 between the movable table 104 and the tank wall 102 to prevent powder material from falling through the gap 126. Specifically, as a diameter of the movable table 104 expands or a center of the movable table 104 shifts in a particular radial direction against the springs 474 of the spring plate 458 to decrease a size of the gap 126, the springs 474 are compressed toward the inner surface 466 of the body 460 of the spring plate 458. This maintains the compression of the rope seal 162 against the inner surface 106 of the tank wall 102.

Similarly, as the diameter of the tank wall 102 contracts such that the tank wall 102 moves closer to the outer edge 120 of the movable table 104 to reduce a size of the gap 126, pressure applied by the rope seal 162 against the body 460 of the spring plate 458 increases. This causes the springs 474 to compress toward the inner surface 466 of the body 460 of the spring plate 458 and maintain the compression of the springs 474 against the recess wall 132 of the movable table 104.

Alternatively, as the movable table 104 contracts or a center of the movable table 104 shifts in a particular radial direction away the springs 474 of the spring plate 458 to increase the size of the gap 126, the springs 474 are biased away from the inner surface 466 of the body 460 of the spring plate 458. This maintains contact between the springs 474 and the recess wall 132 of the movable table 104 and additionally maintains contact of the rope seal 162 against the inner surface 106 of the tank wall 102.

Similarly, as the diameter of the tank wall 102 expands such that the tank wall 102 moves away from the outer edge 120 of the movable table 104 to increase a size of the gap 126, pressure applied by the rope seal 162 against the body 460 of the spring plate 458 decreases. This causes the springs 474 to bias away from the inner surface 466 of the body 460 of the spring plate 458. This maintains contact between the springs 474 and the recess wall 132 of the movable table 104 and additionally maintains contact of the rope seal 162 against the inner surface 106 of the tank wall 102.

From the above, it is to be appreciated that defined herein is a build tank including a seal assembly for preventing powder material from entering adjacent components, thereby resulting in damage to those components. The build tank includes a tank wall, a movable table, and a seal assembly provided between the tank wall and the movable table. The seal assembly includes a spring plate including a plurality of springs contacting an outer edge of the movable table and a rope seal provided between the spring plate and an inner surface of the tank wall and contacting the inner surface of the tank wall. Accordingly, the seal assembly accounts for expansion and contraction of various components of the build tank during operation. For example, during contraction of the movable table and/or expansion of the tank wall such that a gap defined between the movable table and the tank wall increases, the seal assembly expands to ensure that powder material does not fall between the gap and into adjacent components of the build tank.

Further aspects of the embodiments described herein are provided by the subject matter of the following clauses:
A build tank comprising: a tank wall including an inner surface and an outer surface opposite the inner surface; a movable table including an outer edge; and a seal assembly provided between the inner surface of the tank wall and the outer edge of the movable table, the seal assembly comprising: a spring plate including a plurality of springs contacting the outer edge of the movable table; and a rope seal provided between the spring plate and the inner surface of the tank wall and contacting the inner surface of the tank wall.

The build tank of any preceding clause, wherein: the movable table includes an upper surface and a lower surface opposite the upper surface; an actuator receiver is formed in a center of the lower surface of the movable table to receive an end of an actuator configured to move the movable table in a vertical direction.

The build tank of any preceding clause, wherein: a build platform is provided on the upper surface of the movable table; a recess is formed in the outer edge of the movable table; the recess defines a lower lip formed proximate the lower surface of the movable table, an upper lip formed proximate the upper surface of the movable table, and a recess wall extending between the lower lip and the upper lip; and a channel formed in the upper surface of the movable table proximate the outer edge.

The build tank of any preceding clause, further comprising a seal retaining member including: an upper wall and a side wall extending from the upper wall; a tooth formed in a lower surface of the upper wall and received within the channel formed in the upper surface of the movable table; and a slot formed in an inner surface of the side wall and receiving the upper lip.

The build tank of any preceding clause, wherein the seal assembly encircles the outer edge of the movable table and is provided between the side wall of the seal retaining member and the lower lip of the movable table.

The build tank of any preceding clause, wherein: the spring plate comprises a body having an inner surface, an outer surface opposite the inner surface; and the plurality of springs extend from the body in a direction away from the outer surface of the body.

The build tank of any preceding clause, wherein: a plurality of spring openings are formed in the body of the spring plate; and the plurality of springs each extend from a proximal edge of a respective spring opening.

The build tank of any preceding clause, wherein: the seal assembly further comprises a pressure plate provided between the spring plate and the rope seal; the pressure plate includes a body has an inner surface, an outer surface opposite the inner surface, a first end, and a second end opposite the first end; and the inner surface and the outer surface of the pressure plate are planar to provide a flush contact with the outer surface of the spring plate and the rope seal.

The build tank of any preceding clause, wherein: the rope seal comprises a body having a first end and a second end opposite the first end; and the body of the rope seal is wound to define a plurality of windings encircling the spring plate.

The build tank of any preceding clause, wherein the rope seal is formed from a fiber having a diameter equal to or greater than 10 microns and less than or equal to 20 microns.

A build tank comprising: a tank wall including an inner surface and an outer surface opposite the inner surface; a movable table including an outer edge; and a seal assembly provided between the inner surface of the tank wall and the outer edge of the movable table, the seal assembly comprising: a piston ring; and a rope seal provided between the piston ring and the inner surface of the tank wall and contacting the inner surface of the tank wall.

The build tank of any preceding clause, wherein: a recess is formed in the outer edge of the movable table; the recess defines a lower lip formed proximate a lower surface of the movable table, an upper lip formed proximate an upper surface of the movable table, and a recess wall extending between the lower lip and the upper lip; and a channel formed in the upper surface of the movable table proximate the outer edge.

The build tank of any preceding clause, further comprising a seal retaining member including: an upper wall and a side wall extending from the upper wall; a tooth formed in a lower surface of the upper wall and received within the channel formed in the upper surface of the movable table; and a slot formed in an inner surface of the side wall and receiving the upper lip.

The build tank of any preceding clause, wherein the seal assembly encircles the outer edge of the movable table and is provided between the side wall of the seal retaining member and the lower lip of the movable table.

The build tank of any preceding clause, wherein the piston ring is formed from a compressible material including polyurethane foam, silicone rubber, neoprene, or thermoplastic elastomer.

A seal assembly comprising: a spring plate including a plurality of springs contacting the outer edge of the movable table, the spring plate includes a body having an inner surface and an outer surface opposite the inner surface, the plurality of springs extend from the body in a direction away from the outer surface of the body; and a rope seal provided between adjacent the spring plate and the inner surface of the tank wall and contacting the inner surface of the tank wall.

The seal assembly of any preceding clause, wherein: a plurality of openings are formed in the body having a proximal edge and a distal edge opposite the proximal edge; and each spring of the plurality of springs extend from the proximal edge of a respective opening of the plurality of openings.

The seal assembly of any preceding clause, wherein: the seal assembly further comprises a pressure plate provided between the spring plate and the rope seal; the pressure plate includes a body has an inner surface, an outer surface opposite the inner surface, a first end, and a second end opposite the first end; and the inner surface and the outer surface of the pressure plate are planar to provide a flush contact with the outer surface of the spring plate and the rope seal.

The seal assembly of any preceding clause, wherein: the rope seal comprises a body having a first end and a second end opposite the first end; and the body of the rope seal is wound to define a plurality of windings encircling the spring plate.

The seal assembly of any preceding clause, wherein the rope seal is formed from a fiber having a diameter equal to or greater than 10 microns and less than or equal to 20 microns.

A method comprising: positioning a spring plate between an outer edge of a movable table and an inner surface of a tank wall, the spring plate including a plurality of springs contacting the outer edge of the movable table, and positioning a rope seal between the spring plate and the inner surface of the tank wall, the rope seal contacting the inner surface of the tank wall.

The method of any preceding clause, wherein the spring plate and the rope seal substantially encircle the outer edge of the movable table.

The method of any preceding clause, further comprising positioning the spring plate and the rope seal between a side wall of a seal retaining member and a lower lip of the movable table.

The method of any preceding clause, further comprising positioning a pressure plate between the spring plate and the rope seal, wherein an inner surface of the pressure plate provides a flush contact with an outer surface of the spring plate, wherein an outer surface of the pressure plate provides a flush contact with the rope seal.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. A build tank (100) comprising:
a tank wall (102) including an inner surface (106) and an outer surface (108) opposite the inner surface (106);
a movable table (104) including an outer edge (120); and
a seal assembly (128) provided between the inner surface (106) of the tank wall (102) and the outer edge (120) of the movable table (104), the seal assembly (128) comprising:
a spring plate (158) including a plurality of springs (174) contacting the outer edge (120) of the movable table (104); and
a rope seal (162) provided between the spring plate (158) and the inner surface (106) of the tank wall (102) and contacting the inner surface (106) of the tank wall (102).

2. The build tank (100) of claim 1, wherein:
the movable table (104) includes an upper surface (116) and a lower surface (118) opposite the upper surface (116);
an actuator receiver (124) is formed in a center of the lower surface (118) of the movable table (104) to receive an end of an actuator configured to move the movable table (104) in a vertical direction.

3. The build tank (100) of claim 2, wherein:
a build platform (122) is provided on the upper surface (116) of the movable table (104);
a recess (130) is formed in the outer edge (120) of the movable table (104);
the recess (130) defines a lower lip (134) formed proximate the lower surface (118) of the movable table (104), an upper lip (136) formed proximate the upper surface (116) of the movable table (104), and a recess wall (132) extending between the lower lip (134) and the upper lip (136); and
a channel (138) formed in the upper surface (116) of the movable table (104) proximate the outer edge (120).

4. The build tank (100) of claim 3, further comprising a seal retaining member (140) including:
an upper wall (142) and a side wall (144) extending from the upper wall (142);
a tooth (150) formed in a lower surface (118) of the upper wall (142) and received within the channel (138) formed in the upper surface (116) of the movable table (104); and
a slot (156) formed in an inner surface (106) of the side wall (144) and receiving the upper lip (136).

5. The build tank (100) of claim 4, wherein the seal assembly (128) encircles the outer edge (120) of the movable table (104) and is provided between the side wall (144) of the seal retaining member (140) and the lower lip (134) of the movable table (104).

6. The build tank (100) of any one of claims 1-5, wherein:
the spring plate (158) comprises a body (164) having an inner surface (106), an outer surface (108) opposite the inner surface (106); and
the plurality of springs (174) extend from the body (164) in a direction away from the outer surface (108) of the body (164).

7. The build tank (100) of claim 6, wherein:
a plurality of spring openings (176) are formed in the body (164) of the spring plate (158); and
the plurality of springs (174) each extend from a proximal edge (178) of a respective spring opening (176).

8. The build tank (100) of claim 6 or claim 7, wherein:
the seal assembly (128) further comprises a pressure plate (160) provided between the spring plate (158) and the rope seal (162);
the pressure plate (160) includes a body (164) has an inner surface (106), an outer surface (108) opposite the inner surface (106), a first end (170), and a second end (172) opposite the first end (170); and
the inner surface (106) and the outer surface (108) of the pressure plate (160) are planar to provide a flush contact with the outer surface (108) of the spring plate (158) and the rope seal (162).

9. The build tank (100) of any one of claims 1-8, wherein:
the rope seal (162) comprises a body (164) having a first end (170) and a second end (172) opposite the first end (170); and
the body (164) of the rope seal (162) is wound to define a plurality of windings (197) encircling the spring plate (158).

10. The build tank (100) of claim 9, wherein the rope seal (162) is formed from a fiber having a diameter equal to or greater than 10 microns and less than or equal to 20 microns.

11. A seal assembly (128) comprising:
a spring plate (158) including a plurality of springs (174), the spring plate (158) includes a body (164) having an inner surface (106) and an outer surface (108) opposite the inner surface (106), the plurality of springs (174) extend from the body (164) in a direction away from the outer surface (108) of the body (164); and
a rope seal (162) provided adjacent the spring plate (158).

12. The seal assembly (128) of claim 11, wherein:
a plurality of openings are formed in the body (164) having a proximal edge (178) and a distal edge (180) opposite the proximal edge (178); and
each spring (174) of the plurality of springs (174) extend from the proximal edge (178) of a respective opening of the plurality of openings.

13. The seal assembly (128) of claim 11 or claim 12, wherein:
the seal assembly (128) further comprises a pressure plate (160) provided between the spring plate (158) and the rope seal (162);
the pressure plate (160) includes a body (164) has an inner surface (106), an outer surface (108) opposite the inner surface (106), a first end (170), and a second end (172) opposite the first end (170); and
the inner surface (106) and the outer surface (108) of the pressure plate (160) are planar to provide a flush contact with the outer surface (108) of the spring plate (158) and the rope seal (162).

14. The seal assembly (128) of any one of claims 11-13, wherein:
the rope seal (162) comprises a body (164) having a first end (170) and a second end (172) opposite the first end (170); and
the body (164) of the rope seal (162) is wound to define a plurality of windings (197) encircling the spring plate (158).

15. The seal assembly (128) of any one of claims 11-14, wherein the rope seal (162) is formed from a fiber having a diameter equal to or greater than 10 microns and less than or equal to 20 microns.
